# EUROPEAN PATENT SPECIFICATION

(11) **EP 3 486 533 B1**
(45) Date of publication and mention of the grant of the patent: **24.08.2022**
(21) Application number: 18157753.7
(22) Date of filing: 21.02.2018
(51) Int. Cl.: F16J 15/16, F16J 15/447

(54) **FAN**
LÜFTER
VENTILATEUR

(30) Priority: 15.11.2017 EP 17201836
(43) Date of publication of application: 22.05.2019
(73) Proprietor: Elektrosil GmbH, 22761 Hamburg (DE)
(72) Inventor: NIEMANN, Hendrik, 22761 Hamburg (DE)
(74) Representative: RGTH

(56) References cited:
- EP-A1- 3 141 757
- US-A- 1 908 804
- US-A1- 2011 138 963
- US-A1- 2013 004 114

## Description

### Field of the invention

The invention relates to a fan comprising a rotor, a stator and a bearing.

### Description of related art

Fans for dissipating heat from electronic components are generally known from prior art. For ensuring a long service life of the fan it is crucial to avoid external dust or water from an outside of the fan to enter an inside of the fan, especially the bearing of the fan. At the same time, it is essential to avoid leakage of lubricating fluid from the bearing to make sure that the bearing will run smoothly for a maximal amount of time. However, fans known from prior art do not take into account both of the above described objectives.

US 2011/0138963 A1 discloses a sealing device for sealing a space formed by an inner shaft and an outer shaft and for directing a flow of fluid, the inner shaft and the outer shaft being rotatable about a common coaxial axis.

In EP 3 141 757 A1 a fan with a cooling body is disclosed.

US 1 908 804 A describes a packings for preventing the leakage of elastic flied between two concentric elements which rotate relative to each other.

US 2013/0004114 A1 discloses a bearing apparatus and a blower fan.

### Summary of the invention

It is an objective of the present invention to improve a fan in such a way that on one hand leakage of lubricating fluid from a bearing of the fan is avoided while at the same time external dust or water is prevented from entering the bearing.

In a first aspect of the invention the above objective is solved by providing a fan comprising a rotor, a stator and a bearing. The bearing of the fan is preferably disposed between the stator and the rotor to enable a rotational movement of the rotor in relation to the stator. Preferably, the bearing comprises lubricating fluid, especially oil, to decrease friction between the rotating and non-rotating parts of the bearing.

According to the invention the fan further comprises a labyrinth sealing disposed between the stator and the rotor, wherein a first surface forming the labyrinth sealing comprises a first groove for guiding air.

The fan especially functions for dissipating heat from an electronic component generating heat. For this purpose, the rotor of the fan comprises fins for moving air away from the electronic component such that it is cooled.

Under the term "labyrinth sealing" a mechanical sealing is advantageously understood having a winding path which lubricating fluid from a bearing as well as external dust or water would have to pass in order to escape past the bearing. The winding path further represents a sealing gap of the labyrinth sealing. The winding path formed by the labyrinth sealing comprises at least one bent, in particular two bents, which each can further preferred be 180° turns.

In particular, the labyrinth sealing is a non-contacting sealing. In particular, the fan does not comprise a contacting sealing, such as for example a rubber sealing. Since a contacting sealing uses a frictional engagement with the rotor, wear to the sealing reduces its life expectancy, so that using a non-contacting sealing increases the life time of the sealing immensely.

On a first surface forming the labyrinth sealing the fan comprises a first groove for guiding air. The term "groove" is advantageously to be understood as a deepening within the otherwise level first surface. In other words, the first groove is to be understood as an indentation within the first surface. The term "forming the labyrinth sealing" can preferably be understood as defining and restricting the winding path of the labyrinth sealing.

In particular, the first groove serves to amend an air flow through the labyrinth sealing. The first groove advantageously functions to create and/or amend an air flow through the labyrinth sealing. In particular, the first groove is adapted to create an amended air pressure within the labyrinth sealing and/or in an immediate surrounding of the labyrinth sealing, especially towards the bearing or towards an outside of the fan.

Especially, the first groove is configured to pull air from the bearing, particularly during operation of the fan and thus while the rotor is rotating. In this case, air is exhausted from the bearing so that low, especially negative, pressure is created at the location of the bearing. This negative pressure avoids leakage of lubricating fluid since there will be a high, especially positive, pressure at a location within the sealing, especially at a location within the winding path of the sealing at which the first surface is disposed. Alternatively, the first groove can be configured to force air towards the bearing so that there is a high, especially positive, pressure at the location of the bearing and a low, especially negative, pressure a location within the sealing, particularly at a location of the winding path of the sealing at which the first surface is disposed. By pushing air towards the bearing, leakage of lubricating fluid is avoided as well so that the functioning of the bearing is improved.

In particular the first groove is configured to pull air from or push air towards an outside of the fan. In this way, a negative or positive pressure is created in a location of the labyrinth sealing, especially at the location of the winding path of the sealing where the first surface is disposed. Consequently, external dust and/or water are prevented from moving past the sealing and thus finding their way to the bearing.

According to the invention, a second surface forming the labyrinth sealing comprises a second groove for guiding air, wherein the first surface and the second surface are arranged opposed to each other. The first surface and the second surface can either be directly opposed to each other, meaning that they are directed towards each other while there is nothing disposed between the two surfaces so that they can "see" each other. Further, the first surface and the second surface can be indirectly opposed such that the surfaces are directed towards each other; however, other surfaces are disposed in between. The first surface and/or the second surface are preferably formed as a cylindrical surface and are advantageously arranged parallel to each other.

Advantageously, the second groove is configured to guide air as explained before regarding the first grooves. The second groove can be configured to either pull air from the bearing or push air towards it or to pull air from or pull air towards an outside of the fan, particularly during operation of the fan and thus while the rotor is rotating. The first groove and the second groove preferably work together to create a negative or a positive pressure at the location of the bearing and/or at a location within the sealing, especially a location where the first surface and the second surface are disposed.

In another aspect of the invention the fan comprises a rotor, a stator and a bearing, wherein the fan comprises a labyrinth sealing disposed between the stator and the rotor, wherein a first surface forming the labyrinth sealing comprises a first groove for guiding air, wherein a second surface forming the labyrinth sealing comprises a second groove for guiding air, wherein the stator has a recess, while the rotor has a cylindrical shaft which extends into the recess of the stator. Advantageously, the shaft is disposed such that it lies on the rotational axis of the rotor. Further, the rotor comprises a first rotor ring and a second rotor ring both being disposed spaced from the shaft and radially to the side of the shaft. The first rotor ring and the second rotor ring both axially overlap with at least part of the shaft. In particular, the rotor of the fan comprises an inner rotor part and an outer rotor part, wherein the shaft, the first rotor ring and the second rotor ring belong to the inner rotor part. In particular, the shaft, the first rotor ring and the second rotor ring are formed in one piece.

In particular, the first rotor ring is radially disposed closer to the shaft than the second rotor ring. The first rotor ring can thus be understood as an inner rotor ring, while the second rotor ring is an outer rotor ring. The first rotor ring and the second rotor ring preferably both have a longitudinal direction which is disposed in axial direction of the rotor. The first rotor ring as well as the second rotor ring preferably both have a length in axial direction which are most preferred the same such that the axial overlap between the first rotor ring and the shaft as well as between the second rotor ring and the shaft are the same.

The stator, on the other hand, comprises a stator ring which extends into a space between the first rotor ring and the second rotor ring so that a gap is formed between the first rotor ring and the stator ring as well as between the second rotor ring and the stator ring. The gap which is formed by means of the first rotor ring, the second rotor ring and the stator rotor ring forms the winding path of the labyrinth sealing. In other words, the first rotor ring, the second rotor ring as well as the stator ring form the labyrinth sealing consisting of the sealing space being formed by a winding path between the before mentioned components of the fan. Especially, the stator ring extends into the space between the first rotor ring and the second rotor ring in such a way, that it axially overlaps with at least part of the first rotor ring and the second rotor ring. In particular, the stator ring is disposed parallel to the first rotor ring and the second rotor ring meaning that its longitudinal direction is the same as the longitudinal direction of the first and the second rotor ring. The axial overlap between the stator ring and the first and/or the second rotor ring is at least 50 %, more preferred 70 %, most preferred 80 %, of the length of the first rotor ring and/or the second rotor ring.

The first surface comprising the first groove is a radially outwardly facing surface of the first rotor ring or a radially outwardly facing surface of the stator ring, while the second surface is a radially inwardly facing surface of the second rotor ring or a radially inwardly facing surface of the stator ring.

In consequence there are several different arrangements of the first surface and the second surface. In one embodiment the first surface is the radially outwardly facing surface of the first rotor ring, while the second surface is the radially inwardly facing surface of the second rotor ring. In this case, the surfaces are arranged opposed to each other in an indirect way, since the stator ring is disposed in between them.

In another embodiment, the first surface is the radially outwardly facing surface of the first rotor ring, while the second surface is the radially inwardly facing surface of the stator ring. In this case, the surfaces are arranged directly opposed to each other.

In another embodiment, the first surface is the radially outwardly facing surface of the stator ring, while the second surface is the radially inwardly facing surface of the second rotor ring. Again, the surfaces are arranged directly opposed to each other.

According to another embodiment the first surface is the radially outwardly facing surface of the stator ring, while the second surface is the radially inwardly facing surface of the stator ring. In this case the surfaces are not arranged opposed to each other but face in different directions.

Preferably, the first surface is a radially outwardly facing surface of the first rotor ring and the second surface is radially inwardly facing surface of the second rotor ring, wherein a third surface forming the labyrinth sealing comprises a third groove, said third surface being a radially outwardly facing surface of the stator ring, and wherein a fourth surface forming the labyrinth sealing comprises a fourth groove, said fourth surface being a radially inwardly facing surface of the stator ring. The third surface and/or the fourth surface are advantageously arranged parallel to the first surface. According to this embodiment, four surfaces each comprise at least one groove for guiding air within the labyrinth sealing. In particular, the labyrinth sealing is formed by the first surface, the second surface, the third surface and the fourth surface which in total form the sealing space, and thus a winding path, of the labyrinth sealing. Providing each surface with a groove makes the labyrinth sealing especially effective.

The third groove and/or the fourth groove can function to guide air as described above regarding the first groove for creating and/or amending an air flow and thus create an amended air pressure within the labyrinth sealing and/or in an immediate surrounding of the labyrinth sealing, especially towards the bearing or towards an outside of the fan in order to prevent leakage of lubricating fluid and/or the entering of external dust and/or water.

Further, the surface forming the axial free end of the stator ring and/or an opposed surface of the rotor, especially the inner rotor part can comprise at least one groove, especially a set of grooves, for guiding air which can be configured as described above. Both the surface forming the axial free end of the stator ring as well as the opposed surface of the rotor are arranged perpendicular to the first surface.

The preferred embodiments described in the following may apply to both above-described aspects of the invention.

In particular, the first groove and/or the second groove and/or the third groove and/or the fourth groove form at least part of a helix which comprises a handedness. In other words, the first groove and/or the second groove and/or the third groove and/or the fourth groove can be formed in a spiral way. The handedness, or in other words chirality, is a property of the helix describing if the helix is right handed or left handed. With the line of side along the helix's axis, if a clockwise screen motion moves the helix away from the observer, then it is called a right handed helix; if towards the observer, than it is a left handed helix.

The handedness of the helix of the first groove is preferably the same as the handedness of the helix of the second groove. This means, that the first groove and the second groove guide air in the same direction. Further preferred, the handedness of the helix of which the third groove is part of is the same as the handedness of the helix of which the fourth groove is part of such that the third groove and the fourth groove also guide air in the same direction.

The first groove and/or the second groove and/or the third groove and/or the fourth groove can be formed in a "V"-shaped configuration. In other words, the first groove and/or the second groove and/or the third groove and/or the fourth groove is formed as the letter "V" within the respective surface. The letter "V" comprises two legs being connected to each other on one side and having free ends on the other side.

The "V"-shaped configurations of the first surface and the second surface are particularly formed such that they, namely the formed letters "V" of the configuration, point in the same circumferential direction. By pointing in the same circumferential direction, the first surface and the second surface can work together to guide air in the same direction. Having a "V"-shape the first groove and/or the second groove can pull air towards the point at which the two legs of the "V" are connected to each other or push air towards the free ends of the legs. Thus, either a low, especially negative, or a high, especially positive, pressure is formed in the middle section of the "V"-shaped configuration comprising the point at which the legs are connected. This high or low pressure prevents lubricating fluid and/or external dust and/or water from escaping past the bearing.

Advantageously, the first surface comprises a first set of groove and/or the second surface comprises a second set of groove and/or the third surface comprises third set of grooves and/or the fourth surfaces comprises a fourth set of grooves. A set comprises more than one groove. The first set of groove comprises the first groove, while the second set of grooves comprises the second groove, the third set of grooves comprises the third groove and the fourth set of grooves comprises the fourth groove. Especially, each groove of a set is configured as explained above.

In particularly, the grooves within the first set and/or the second set and/or the third set and/or the fourth set are arranged regularly along the respective surface. In particular, the grooves of the first set and/or the second set and/or third set and/or the fourth set comprise a constant distance to each other in circumferential direction of the respective surface. In particular, the grooves of the first set and/or the second set and/or the third set and/or the fourth set are formed parallel to each other.

### Brief description of the drawings

The invention will be described below with reference to the following figures which show in schematic representation:
- figure 1: a radial cut of a fan according to the invention;
- figure 2: a perspective view of the rotor of the fan according to figure 1;
- figure 3: a cross sectional view of the rotor and the stator ring of the fan according to figures 1 and 2 along the line A-A of figure 1;
- figure 4a: a perspective view of the rotor of the fan according to figures 1 to 3;
- figure 4b: a perspective view on the second rotor ring of the fan according to figures 1 to 3;
- figure 5a: a top view on the first surface of the fan according to figures 1 to 4b;
- figure 5b: a top view on the second surface of the fan according to figures 1 to 4b;
- figure 6a: a perspective view of a rotor of another fan according to the invention;
- figure 6b: a perspective view on the second rotor ring of the fan according to figure 6a;
- figure 7a: a top view on a first surface of the fan according to figures 6a and 6b;
- figure 7b: a top view on a second surface of the fan according to figures 6a and 6b;
- figure 8: a cross sectional view of a rotor and the stator ring of another fan according to the invention;
- figure 9: a cross sectional view of a rotor and the stator ring of another fan according to the invention;
- figure 10: a cross sectional view of a rotor and the stator ring of another fan according to the invention; and
- figure 11: a cross sectional view of a rotor and the stator ring of another fan according to the invention.

### Preferred embodiments of the invention

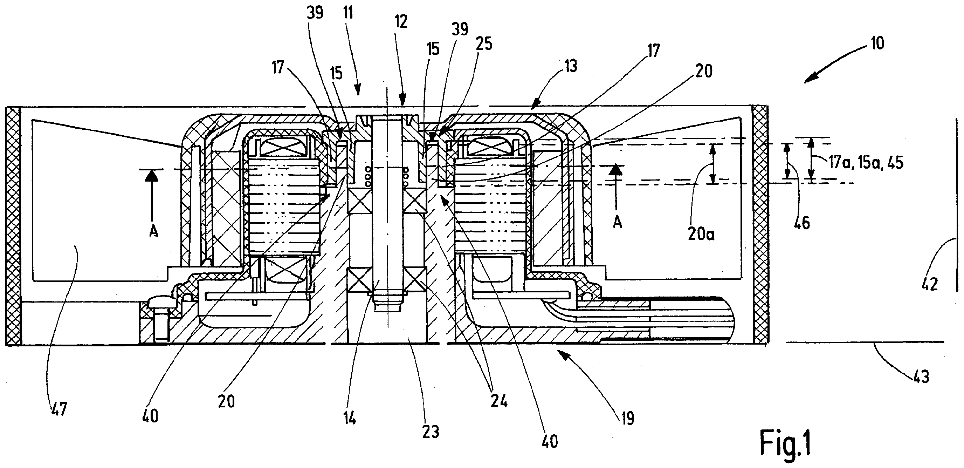

Figure 1 shows a radial cut of a fan (10) comprising a rotor (11) and a stator (19). The fan has an axial direction (38) and a radial direction (39). The stator (19) comprises a recess (23) in which the shaft (14) of the rotor (11) extends. Within the recess (23) a bearing (24), namely a sleeve bearing, is disposed between the rotor (11) and the stator (19).

The rotor (11) comprises an inner rotor part (12) and an outer rotor part (13) wherein the outer rotor part (13) is connected to fins (43) creating an air flow for dissipating heat of an electronic component. The rotor (11), in particular the inner rotor part (12), comprises a shaft (14) as well as a first rotor ring (15) and a second rotor ring (17) which are integrally formed. The first rotor ring (15) and the second rotor ring (17) extend in axial direction (38) as well as circumferentially around the shaft (14). Radially, they are disposed in a distance to the shaft (14). The first rotor ring (15) is disposed closer to the shaft (14) in radial direction (39) than the second rotor ring (17). The first rotor ring (15) has a length (15a) in axial direction (38) which corresponds to the length (17a) of the second rotor ring (17). Both the first rotor ring (15) and the second rotor ring (17) overlap in axial direction (38) with the rotor shaft (14) along the axial overlap (41).

The stator (19) comprises a stator ring (20) with a length (20a) which extends in axial direction (38) and is disposed in radial direction (39) between the first rotor ring (15) and the second rotor ring (17). The stator ring (20) overlaps in axial direction (38) with the shaft (14) of the rotor (11) by an axial overlap (42).

Between the first rotor ring (15), the stator ring (20) and the second rotor ring (17) a labyrinth sealing (25) is formed in form of a path winding between the first rotor ring (15), the stator ring (20) and the second rotor ring (17). The path comprises a first bent (35) which is a 180° turn as well as a second bent (36), also a 180° turn, to prevent leakage from lubricating fluid from the bearing as well as the entering of external dust or water.

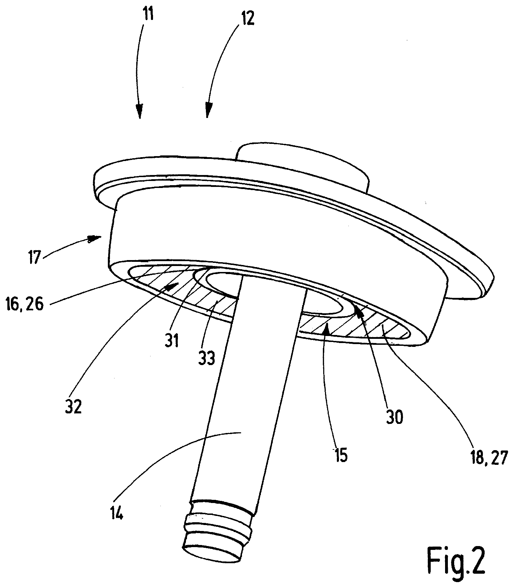

In figure 2 a perspective view of the rotor (11) of the fan (10) according to figure 1 is shown. In particular the inner rotor part (12) is depicted comprising the shaft (14), the first rotor ring (15) and the second rotor ring (17).

The first rotor ring (15) comprises a radially outwardly facing surface (16), while the second rotor ring (17) comprises a radially inwardly facing surface (18) which both extend circumferentially around the shaft (14) and are formed cylindrically. The radially outwardly facing surface (16) of the first rotor ring (15) functions as a first surface (26) comprising a first set (30) of grooves including a first groove (31). The radially inwardly facing surface (18) of the second rotor ring (17) comprises a second set (32) of grooves including a second groove (33) and functions as a second surface (27).

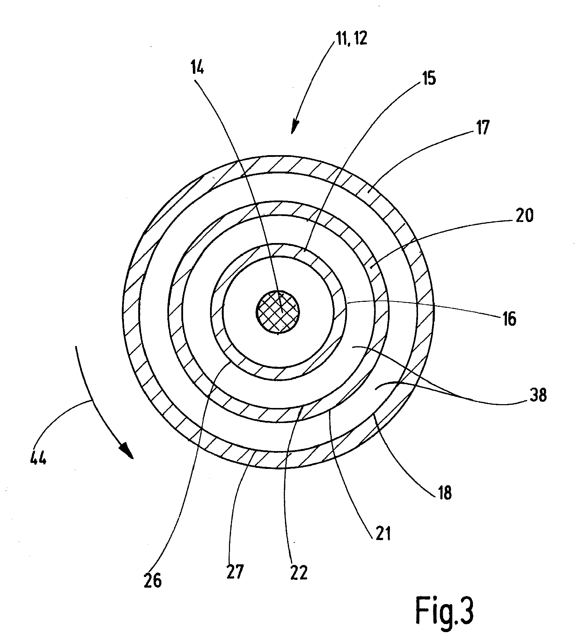

Figure 3 shows a cross sectional view of the rotor (11), namely the inner rotor part (12), as well as the stator (19), namely the stator ring (20), of the fan (10) according to figures 1 and 2 along the line A-A of figure 1. In the sectional view of figure 3 the shaft (14), the first rotor ring (15) as well as the second rotor ring (17) of the rotor (11) can be seen. Further, the stator ring (20) of the stator (19) is shown.

The first rotor ring (15) comprises a radially outwardly facing surface (16), while the second rotor ring (17) comprises a radially inwardly surface (18). The stator ring (20) comprises a radially outwardly facing surface (21) as well as a radially inwardly facing surface (22). The radially outwardly facing surface (16) of the first rotor ring (15) is directly opposed to the radially inwardly facing surface (22) of the stator ring (20). The radially inwardly facing surface (18) of the second rotor ring (17) is directly opposed to the radially outwardly facing surface (21) of the stator ring (20). The radially outwardly facing surface (16) of the first rotor ring (15) is indirectly opposed to the radially inwardly facing surface (18) of the second rotor ring (17) since the stator ring (20) is disposed in between.

Between the first rotor ring (15) and the stator ring (20) as well as between the stator ring (20) and the second rotor ring (17) a gap (34) acting as a sealing space or in other words path of the labyrinth sealing (25) is formed.

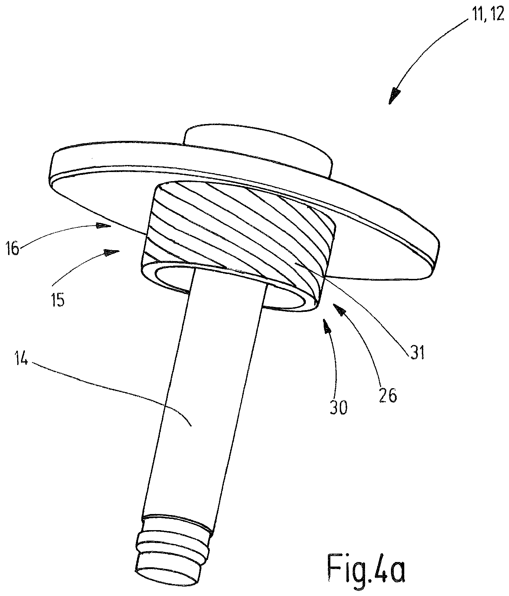

For a better representation of the grooves of the first set (30) of the first surface (26) figure 4a shows a perspective view on the rotor (11), in particular the inner rotor part (12), of the fan of figures 1 to 3, wherein the second rotor ring (17) has not been depicted to have a better view on the first surface (26). The grooves of the first set (30) comprise a first groove (31) and are formed in a spiral way. In other words, each groove forms part of a helix which is left handed. The grooves of the first set (30) are formed parallel to each other.

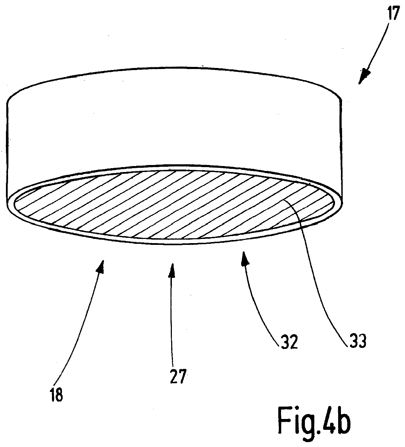

Figure 4b shows a perspective view on the second rotor ring (17) of the fan according to figures 1 to 3. Despite the fact that the shaft (14), the first rotor ring (15) and the second rotor ring (17) are integrally formed, only the second rotor ring (17) is depicted in figure 4b in order to have a better view on the second surface (27) comprising the second set (32) of grooves including the second groove (33). The grooves of the second set (32) are each formed parallel to each other and are formed analogously to the grooves of the first set (30). The grooves are thus formed in a spiral way and each forms part of a helix which is left handed. The handedness of the helixes of which the grooves of the first set (30) of figure 4a are part of is therefore the same as the handedness of the respective helixes of the second set (32) of grooves.

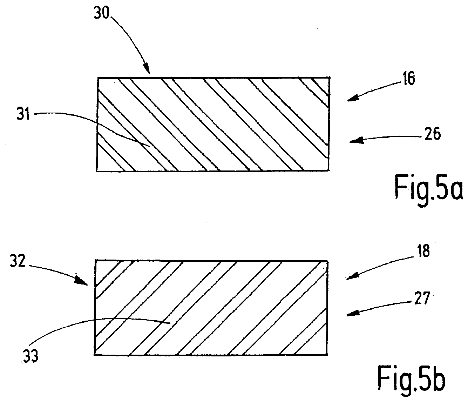

Figure 5a shows a top view on the first surface (26), namely the radially outwardly facing surface (16) of the first rotor ring (15) of the fan of figures 1 to 4b, while figure 5b shows a top view on the second surface (27) namely the radially inwardly facing surface (18) of the second rotor ring (17). It can clearly be seen that the first surface (26) and the second surface (27) guide air into the same direction.

With the rotational direction of the rotor being clockwise seen from the free end of the shaft (see figure 4a), the grooves of the first set (30) push air towards the bearing (24), while the grooves of the second set (32) will push air towards the second bent (36) and thus an outside of the fan. Provided an opposite direction of rotation air will be pulled from the bearing (24) by means of the first set (30) and from an outside of the fan (10), namely from the second bent (36) towards the first bent (35), by means of the second set (32).

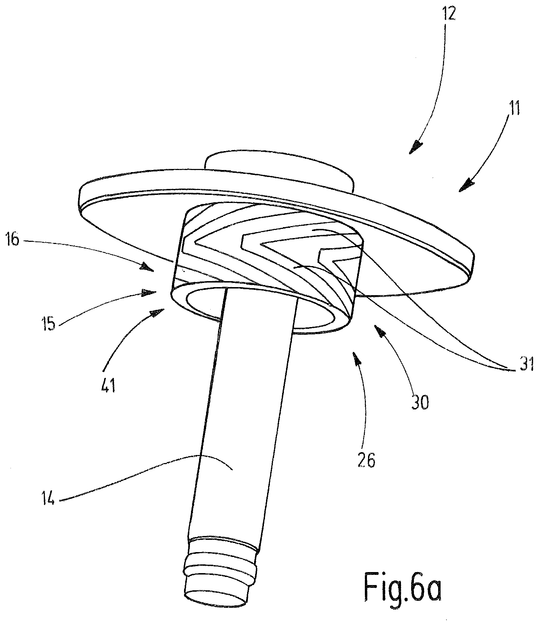

Figure 6a shows a perspective view of a rotor (11), namely the inner part (12) of a rotor (11), of another fan (10) according to the invention. The fan comprising a rotor (11) and a stator (19) is configured as shown in figures 1 to 3 except for the fact that the grooves of the first set (30) of the first surface (26) and the grooves of the second set (32) of the second surface (27) are configured in a different way.

For illustrated purposes, the second rotor ring (17) is again not shown in figure 6a in order to have a better view on the radially outwardly facing surface (16) of the first rotor ring (15). The grooves of the first set (30) are formed in a "V"-shaped configuration (37) meaning that they are formed as the letter "V". The grooves are formed parallel to each other so that the "V" of the grooves point in the same circumferential direction (40).

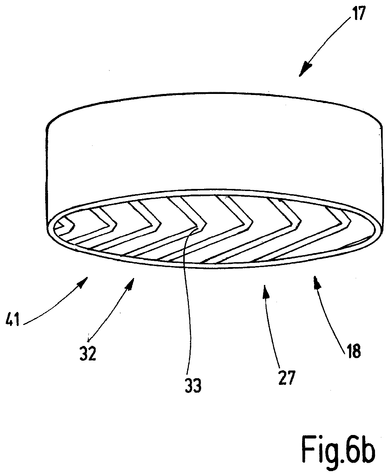

Figure 6b shows a perspective view on the second rotor ring (17) of the fan according to figure 6a, namely in a separate illustration to better show its radially inwardly facing surface (18) comprising the second set (32) of grooves including the second groove (33). The grooves are also formed in a "V"-shaped configuration (37) and parallel to each other. The grooves of the second set (32) point in the same circumferential direction as the groove of the first set (30) of the first surface (26).

With the rotational direction being clockwise seen from the free end of the shaft (see figure 4a), the grooves of the first set (30) push air towards the bearing (24) as well as towards the first bent (35), while the grooves of the second set (32) push air towards the first bent (35) and towards the second bent (36). An opposite direction of rotation will pull air in the opposite above described directions towards a middle section of the first surface (26) and the second surface (27).

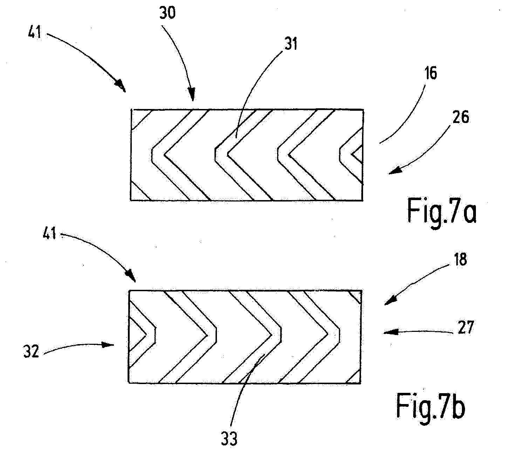

Figure 7a shows a top view on the first surface (26) of the fan according to figures 6a and 6b, while figure 7b shows a top view on the second surface (27). When being directed opposed to each other, the "V"-shaped configuration (37) of the surfaces point in the same circumferential direction (40).

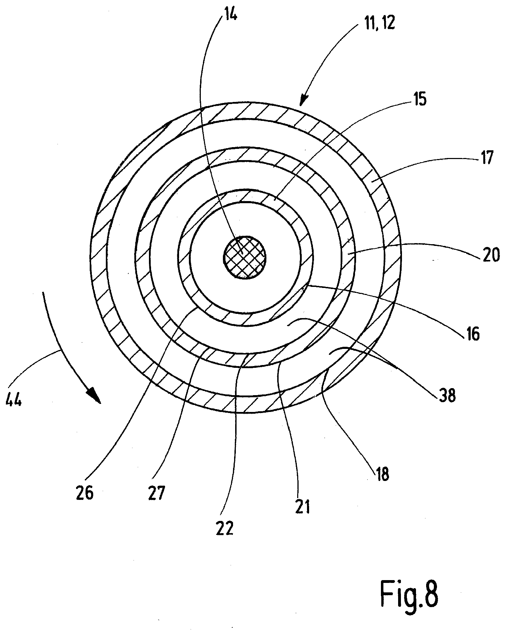

In figure 8 a cross sectional view of a rotor (11), namely an inner part (12) of a rotor, and the stator ring (20) of a stator (19) of another fan (10) is shown. In the shown configuration, the first surface (26) corresponds to a radially outwardly facing surface (16) of the first rotor ring (15), while the second surface (27) comprising the second groove (33) is disposed on a radially inwardly facing surface (22) of the stator ring (20). The first surface (26) and the second surface (27) are thus arranged directly opposed to each other.

Depending on the direction of rotation of the rotor (11) and given a spiral configuration, the grooves of the first set (30) and the second set (32) push air towards the bearing (24), or, provided an opposite direction of rotation, they pull air from the bearing (24) towards the first bent (35). In case of a "V"-shaped configuration (37), the grooves push air towards the bearing (24) as well as towards the first bent (35) or, provided an opposite rotational direction, they will pull air in the opposite above described directions towards a middle section of the first surface (26) and the second surface (27).

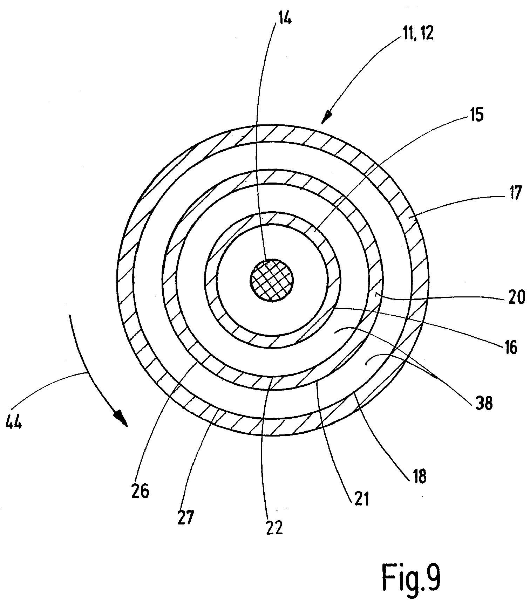

Figure 9 shows a cross sectional view of a rotor (11) and a stator ring (20) of another fan (10) according to the invention. The first surface (26) corresponds to the radially outwardly facing surface (21) of the stator ring (20), whereas the second surface (27) is formed by the radially inwardly facing surface (18) of the second rotor ring (17).

Depending on the direction of rotation of the rotor (11) and given a spiral configuration, the grooves of the first set (30) and the second set (32) push air towards the second bent (36), and thus towards an outside of the fan (10), or, provided an opposite direction of rotation, they pull air from the outside of the fan (10) towards the first bent (35). In case of a "V"-shaped configuration (37), the grooves push air towards the first bent (35) as well as towards the second bent (36) or, provided an opposite rotational direction, they will pull air in the opposite above described directions towards a middle section of the first surface (26) and the second surface (27).

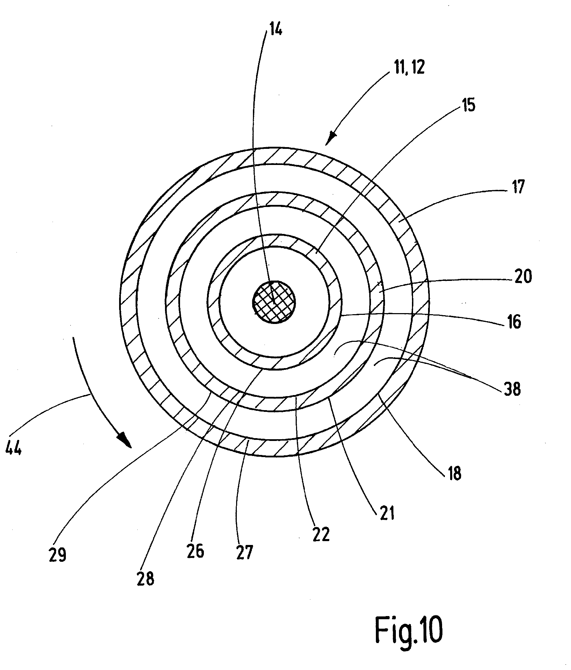

In figure 10 a cross sectional view of a rotor (11) and the stator ring (20) of another fan (10) according to the invention is shown. While the first surface is represented by the radially outwardly facing surface (16) of the first rotor ring (15) and the second surface is formed by the radially inwardly facing surface (18) of the second rotor ring (17), there is a third surface (28) being formed by the radially inwardly facing surface (22) of the stator ring (20) and a fourth surface (29) being formed by the radially outwardly facing surface (21) of the stator ring (20). The third surface (28) comprises a third set of grooves including a third groove while the fourth surface (29) comprises a fourth set of grooves including a fourth groove.

Depending on the direction of rotation and given a spiral configuration, the grooves of the first set (30) and the third set push air towards the bearing (24) or pull air from the bearing (24), while the grooves of the second set (32) and the fourth set will push air towards or pull air from an outside of the fan. Given a "V"-shaped configuration, the grooves of the first and the third set push air towards the bearing (24) as well as towards the first bent (35). The grooves of the second and the fourth set push air towards the second bent (36) as well as towards the first bent (35). An opposite direction of rotation will pull air in the opposite above described directions towards a middle section of the first surface (26) as well as the third surface (28) and a middle section of the second surface (27) as well as the fourth surface (29).

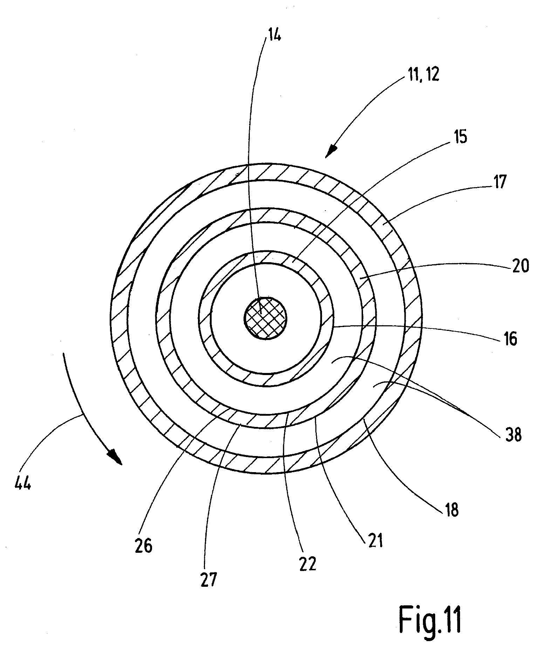

Figure 11 shows a cross sectional view of a rotor (11) and the stator ring (20) of another fan (10) according to the invention. The first surface (26) is disposed on the radially inwardly facing surface (22) of the stator ring (20), whereas the second surface (27) is disposed on the radially outwardly facing surface (21) of the stator ring (20).

Depending on the direction of rotation of the rotor (11) and given a spiral configuration, the grooves of the first set (30) push air towards the bearing (24) or pull air from the bearing (24), while the grooves of the second set (32) push air towards the second bent (36), and thus towards an outside of the fan (10), or pull air from the second bent (36) towards the first bent (35). In case of a "V"-shaped configuration (37), the grooves of the first set (30) push air towards the bearing (24) as well as towards the first bent (35) or, provided an opposite rotational direction, they will pull air in the opposite above described directions towards a middle section of the first surface. The grooves of the second set (32) will push air towards the first bent (35) and the second bent (36) or, provided an opposite rotational direction, they will pull air in the opposite above described directions towards a middle section of the second surface.

The rotor (11) and the stator (19) of the embodiments according to figures 8 to 11 are preferably configured as shown in figures 1 to 5b or figures 1 to 3 and 6a to 7b.

### Reference signs

- 10: fan
- 11: rotor
- 12: inner rotor part
- 13: outer rotor part
- 14: shaft
- 15: first rotor ring
- 15a: length of the first rotor ring
- 16: radially outwardly facing surface of the first rotor ring
- 17: second rotor ring
- 17a: length of the second rotor ring
- 18: radially inwardly facing surface of the second rotor ring
- 19: stator

- 20: stator ring
- 20a: length of the stator ring
- 21: radially outwardly facing surface of the stator ring
- 22: radially inwardly facing surface of the stator ring
- 23: recess
- 24: bearing
- 25: labyrinth sealing
- 26: first surface
- 27: second surface
- 28: third surface
- 29: fourth surface

- 30: first set of grooves
- 31: first groove
- 32: second set of grooves
- 33: second groove
- 34: gap
- 35: first bent
- 36: second bent
- 37: V-shaped configuration
- 38: axial direction
- 39: radial direction

- 40: circumferential direction
- 41: axial overlap with the rotor shaft
- 42: axial overlap with the stator ring
- 43: fins

## Claims

1. Fan (10)
comprising a rotor (11), a stator (19) and a bearing (24),
wherein the fan (10) comprises a labyrinth sealing (25) disposed between the stator (19) and the rotor (11),
wherein a first surface (26) forming the labyrinth sealing (25) comprises a first groove (31) for guiding air, wherein
a second surface (27) forming the labyrinth sealing (25) comprises a second groove (33) for guiding air,
**characterized in that** the first surface (26) and the second surface (27) are arranged opposed to each other such that the surfaces are directed towards each other.

2. Fan (10) comprising a rotor (11), a stator (19) and a bearing (24),
wherein the fan (10) comprises a labyrinth sealing (25) disposed between the stator (19) and the rotor (11),
wherein a first surface (26) forming the labyrinth sealing (25) comprises a first groove (31) for guiding air, wherein
a second surface (27) forming the labyrinth sealing (25) comprises a second groove (33) for guiding air,
**characterized in that** the stator (19) has a recess (23) and the rotor (11) has a cylindrical shaft (14) extending into the recess (23) of the stator (19), wherein the rotor (11) comprises a first rotor ring (15) and a second rotor ring (17) both being disposed spaced from and radially to the side of the shaft (14) and axially overlapping with at least a part of the shaft (14),wherein the stator (19) comprises a stator ring (20) extending into a space between the first rotor ring (15) and the second rotor ring (17) so that a gap (34) is formed between the first rotor ring (15) and the stator ring (20) as well as between the second rotor ring (17) and the stator ring (20), said gap acting as a sealing space of the labyrinth sealing (25),
wherein the first surface (26) is a radially outwardly facing surface (16) of the first rotor ring (15) or a radially outwardly facing surface (21) of the stator ring (20), and wherein the second surface (27) is a radially inwardly facing surface (18) of the second rotor ring (17) or a radially inwardly facing surface (22) of the stator ring (20).

3. Fan (10) according to claim 2,
**characterized in that** the first surface (26) is a radially outwardly facing surface (16) of the first rotor ring (15) and the second surface (27) is a radially inwardly facing surface (18) of the second rotor ring (17), wherein a third surface (28) forming the labyrinth sealing (25) comprises a third groove, said third surface (28) being a radially outwardly facing surface (21) of the stator ring (20), and wherein a fourth surface (29) forming the labyrinth sealing (25) comprises a fourth groove, said fourth surface (29) being a radially inwardly facing surface (22) of the stator ring (20).

4. Fan (10) according to any previous claim,
**characterized in that** the first groove (31) and/or the second groove (33) and/or the third groove and/or the fourth groove is formed as at least a part of a helix comprising a handedness.

5. Fan (10) according to claim 4,
**characterized in that** the handedness of the helix of the first groove (31) is the same as the handedness of the helix of the second groove (33).

6. Fan (10) according to any one of claims 4 or 5 when dependent on claim 3,
**characterized in that** the handedness of the helix formed by the third groove is the same as the handedness of the helix of the fourth groove.

7. Fan (10) according to any previous claim,
**characterized in that** the first groove (31) and/or the second groove (33) and/or the third groove and/or the fourth groove is formed in a "V"-shaped configuration (37).

8. Fan (10) according to claim 7,
**characterized in that** the "V"-shaped configuration (37) of the first groove (31) and the "V"-shaped configuration (37) of the second groove (33) point in the same circumferential direction (40).

9. Fan (10) according to any of claims 7 or 8 when dependent on claim 3,
**characterized in that** the "V"-shaped configuration (37) of the third groove and the "V"-shaped configuration (37) of the fourth groove point in the same circumferential direction (40).

10. Fan (10) according to any of the previous claims,
**characterized in that** the first surface (26) comprises a first set (30) of grooves and/or the second surface (27) comprises a second set (32) of grooves and/or the third surface (28) comprises a third set of grooves and/or the fourth surface (29) comprises a fourth set of grooves.

11. Fan (10) according to claim 10,
**characterized in that** the grooves of the first set (30) and/or the grooves of the second set (32) and/or the grooves of the third set and/or the grooves of the fourth set are formed parallel to each other.

## Patentansprüche

1. Lüfter (10),
umfassend einen Rotor (11), einen Stator (19) und ein Lager (24),
wobei der Lüfter (10) eine zwischen dem Stator (19) und dem Rotor (11) angeordnete Labyrinthdichtung (25) umfasst,
wobei eine die Labyrinthdichtung (25) ausbildende erste Fläche (26) eine erste Nut (31) zum Führen von Luft umfasst, wobei
eine die Labyrinthdichtung (25) ausbildende zweite Fläche (27) eine zweite Nut (33) zum Führen von Luft umfasst,
**dadurch gekennzeichnet, dass** die erste Fläche (26) und die zweite Fläche (27) gegenüberliegend angeordnet sind, so dass die Flächen einander zugewandt sind.

2. Lüfter (10) umfassend einen Rotor (11), einen Stator (19) und ein Lager (24),
wobei der Lüfter (10) eine zwischen dem Stator (19) und dem Rotor (11) angeordnete Labyrinthdichtung (25) umfasst,
wobei eine die Labyrinthdichtung (25) ausbildende erste Fläche (26) eine erste Nut (31) zum Führen von Luft umfasst, wobei
eine die Labyrinthdichtung (25) ausbildende zweite Fläche (27) eine zweite Nut (33) zum Führen von Luft umfasst,
**dadurch gekennzeichnet, dass** der Stator (19) eine Aussparung (23) aufweist und der Rotor (11) eine zylindrische Welle (14) aufweist, die sich in die Aussparung (23) des Stators (19) erstreckt,
wobei der Rotor (11) einen ersten Rotorring (15) und einen zweiten Rotorring (17) umfasst, die beide beabstandet von und radial zu der Seite der Welle (14) angeordnet sind und sich axial mit mindestens einem Teil der Welle (14) überlappen, wobei der Stator (19) einen Statorring (20) umfasst, der sich in einen Raum zwischen dem ersten Rotorring (15) und dem zweiten Rotorring (17) erstreckt, so dass ein Spalt (34) zwischen dem ersten Rotorring (15) und dem Statorring (20) sowie zwischen dem zweiten Rotorring (17) und dem Statorring (20) ausgebildet ist, wobei der Spalt als Dichtraum der Labyrinthdichtung (25) fungiert,
wobei die erste Fläche (26) eine radial nach außen gewandte Fläche (16) des ersten Rotorrings (15) oder eine radial nach außen gewandte Fläche (21) des Statorrings (20) ist, und wobei die zweite Fläche (27) eine radial nach innen gewandte Fläche (18) des zweiten Rotorrings (17) oder eine radial nach innen gewandte Fläche (22) des Statorrings (20) ist.

3. Lüfter (10) gemäß Anspruch 2,
**dadurch gekennzeichnet, dass** die erste Fläche (26) eine radial nach außen gewandte Fläche (16) des ersten Rotorrings (15) ist und die zweite Fläche (27) eine radial nach innen gewandte Fläche (18) des zweiten Rotorrings (17) ist, wobei eine dritte Fläche (28), die die Labyrinthdichtung (25) bildet, eine dritte Nut umfasst, wobei die dritte Fläche (28) eine radial nach außen gewandte Fläche (21) des Statorrings (20) ist, und wobei eine vierte Fläche (29), die die Labyrinthdichtung (25) bildet, eine vierte Nut umfasst, wobei die vierte Fläche (29) eine radial nach innen gewandte Fläche (22) des Statorrings (20) ist.

4. Lüfter (10) gemäß einem der vorhergehenden Ansprüche,
**dadurch gekennzeichnet, dass** die erste Nut (31) und/oder die zweite Nut (33) und/oder die dritte Nut und/oder die vierte Nut als mindestens ein Teil einer Spirale ausgebildet sind, die eine Händigkeit umfasst.

5. Lüfter (10) gemäß Anspruch 4,
**dadurch gekennzeichnet, dass** die Händigkeit der Spirale der ersten Nut (31) dieselbe ist wie die Händigkeit der Spirale der zweiten Nut (33).

6. Lüfter (10) gemäß einem der Ansprüche 4 oder 5, bei Abhängigkeit von Anspruch 3,
**dadurch gekennzeichnet, dass** die Händigkeit der Spirale, die durch die dritte Nut ausgebildet wird, die gleiche ist wie die Händigkeit der Spirale der vierten Nut.

7. Lüfter (10) gemäß einem der vorhergehenden Ansprüche,
**dadurch gekennzeichnet, dass** die erste Nut (31) und/oder die zweite Nut (33) und/oder die dritte Nut und/oder die vierte Nut in einer "V"-förmigen Konfiguration (37) ausgebildet sind.

8. Lüfter (10) gemäß Anspruch 7,
**dadurch gekennzeichnet, dass** die "V"-förmige Konfiguration (37) der ersten Nut (31) und die "V"-förmige Konfiguration (37) der zweiten Nut (33) in die gleiche Umfangsrichtung (40) weisen.

9. Lüfter (10) gemäß einem der Ansprüche 7 oder 8, bei Abhängigkeit von Anspruch 3,
**dadurch gekennzeichnet, dass** die "V"-förmige Konfiguration (37) der dritten Nut und die "V"-förmige Konfiguration (37) der vierten Nut in die gleiche Umfangsrichtung (40) weisen.

10. Lüfter (10) gemäß einem der vorhergehenden Ansprüche,
**dadurch gekennzeichnet, dass** die erste Fläche (26) einen ersten Satz (30) von Nuten umfasst und/oder die zweite Fläche (27) einen zweiten Satz (32) von Nuten umfasst und/oder oder die dritte Fläche (28) einen dritten Satz von Nuten umfasst und/oder die vierte Fläche (29) einen vierten Satz von Nuten umfasst.

11. Lüfter (10) gemäß Anspruch 10,
**dadurch gekennzeichnet, dass** die Nuten des ersten Satzes (30) und/oder die Nuten des zweiten Satzes (32) und/oder die Nuten des dritten Satzes und/oder die Nuten des vierten Satzes parallel zueinander ausgebildet sind

## Revendications

1. Ventilateur (10),
comprenant un rotor (11), un stator (19) et un palier (24),
dans lequel le ventilateur (10) comprend un joint à labyrinthe (25) disposé entre le stator (19) et le rotor (11),
dans lequel une première surface (26) formant le joint à labyrinthe (25) comprend une première rainure (31) pour guider l'air,
dans lequel une deuxième surface (27) formant le joint à labyrinthe (25) comprend une deuxième rainure (33) pour guider l'air, **caractérisé en ce que** la première surface (26) et la deuxième surface (27) sont disposées en vis-à-vis l'une de l'autre de sorte que les surfaces soient dirigées l'une vers l'autre.

2. Ventilateur (10) comprenant un rotor (11), un stator (19) et un palier (24),
dans lequel le ventilateur (10) comprend un joint à labyrinthe (25) disposé entre le stator (19) et le rotor (11),
dans lequel une première surface (26) formant le joint à labyrinthe (25) comprend une première rainure (31) pour guider l'air,
dans lequel une deuxième surface (27) formant le joint à labyrinthe (25) comprend une deuxième rainure (33) pour guider l'air,
**caractérisé en ce que** le stator (19) comporte un évidement (23) et le rotor (11) comporte un arbre cylindrique (14) s'étendant dans l'évidement (23) du stator (19),
dans lequel le rotor (11) comprend un premier anneau de rotor (15) et un deuxième anneau de rotor (17) étant tous deux disposés en étant espacés du côté de l'arbre (14) et radialement par rapport à celui-ci et se superposant axialement à au moins une partie de l'arbre (14), dans lequel le stator (19) comprend un anneau de stator (20) s'étendant dans un espace entre le premier anneau de rotor (15) et le deuxième anneau de rotor (17) de sorte qu'un interstice (34) soit formé entre le premier anneau de rotor (15) et l'anneau de stator (20) ainsi qu'entre le deuxième anneau de rotor (17) et l'anneau de stator (20), ledit espace agissant comme un espace d'étanchéité du joint à labyrinthe (25),
dans lequel la première surface (26) est une surface tournée radialement vers la surface extérieure (16) du premier anneau de rotor (15) ou une surface tournée radialement vers l'extérieur (21) de l'anneau de stator (20), et dans lequel la deuxième surface (27) est une surface tournée radialement vers l'intérieur (18) du deuxième anneau de rotor (17) ou une surface tournée radialement vers l'intérieur (22) de l'anneau de stator (20).

3. Ventilateur (10) selon la revendication 2, **caractérisé en ce que** la première surface (26) est une surface tournée radialement vers l'extérieur (16) du premier anneau de rotor (15) et la deuxième surface (27) est une surface tournée radialement vers l'intérieur (18) du deuxième anneau de rotor (17), dans lequel une troisième surface (28) formant le joint à labyrinthe (25) comprend une troisième rainure, ladite troisième surface (28) étant une surface tournée radialement vers l'extérieur (21) de l'anneau de stator (20), et dans lequel une quatrième surface (29) formant le joint à labyrinthe (25) comprend une quatrième rainure, ladite quatrième surface (29) étant une surface orientée radialement vers l'intérieur (22) de l'anneau de stator (20).

4. Ventilateur (10) selon une quelconque des revendications précédentes, **caractérisé en ce que** la première rainure (31) et/ou la deuxième rainure (33) et/ou la troisième rainure et/ou la quatrième rainure est formée comme au moins une partie d'une hélice comprenant une chiralité.

5. Ventilateur (10) selon la revendication 4, **caractérisé en ce que** la chiralité de l'hélice de la première rainure (31) est le même que la chiralité de l'hélice de la deuxième rainure (33).

6. Ventilateur (10) selon une quelconque des revendications 4 ou 5 lorsqu'elles dépendent de la revendication 3,
**caractérisé en ce que** la chiralité de l'hélice formée par la troisième rainure est la même que la chiralité de l'hélice de la quatrième rainure.

7. Ventilateur (10) selon une quelconque des revendications précédentes, **caractérisé en ce que** la première rainure (31) et/ou la deuxième rainure (33) et/ou la troisième rainure et/ou la quatrième rainure est formée en configuration en forme de « V » (37).

8. Ventilateur (10) selon la revendication 7, **caractérisé en ce que** la configuration en forme de « V » (37) de la première rainure (31) et la configuration en forme de « V » (37) de la deuxième rainure (33) pointent dans la même direction circonférentielle (40).

9. Ventilateur (10) selon une quelconque des revendications 7 ou 8 lorsqu'elles dépendent de la revendication 3, **caractérisé en ce que** la configuration en forme de « V » (37) de la troisième rainure et la configuration en forme de « V » (37) de la quatrième rainure pointent dans la même direction circonférentielle (40).

10. Ventilateur (10) selon une quelconque des revendications précédentes, **caractérisé en ce que** la première surface (26) comprend un premier ensemble (30) de rainures et/ou la deuxième surface (27) comprend un deuxième ensemble (32) de rainures et/ou la troisième surface (28) comprend un troisième ensemble de rainures et/ou la quatrième surface (29) comprend un quatrième ensemble de rainures.

11. Ventilateur (10) selon la revendication 10, **caractérisé en ce que** les rainures du premier ensemble (30) et/ou les rainures du deuxième ensemble (32) et/ou les rainures du troisième ensemble et/ou les rainures du quatrième ensemble sont formés parallèlement les uns aux autres.
